# EUROPEAN PATENT APPLICATION

(11) **EP 2 629 209 A1**
(43) Date of publication of application: **21.08.2013**
(21) Application number: 12156055.1
(22) Date of filing: 17.02.2012
(51) Int. Cl.: G06F 17/24, G06F 17/27, G06F 17/30

(54) **System and method of sharing previously-associated application data from a secure electronic device**

(71) Applicant: Research In Motion Limited, Waterloo, ON N2L 3W8 (CA)
(72) Inventor: Kalu, Kalu Onuka, Waterloo, Ontario N2L 3W8 (CA); Klassen, Gerhard Dietrich, Waterloo, Ontario N2L 3W8 (CA)
(74) Representative: Greenaway, Martin William

(57) **Abstract**

Systems and methods for sharing previously-associated application data from a secure device can include a first device (e.g., a tablet computer) and a second device (e.g., a smartphone which can be a more secure device than the tablet computer) coupled to one another. The tablet computer can send a request to the smartphone for previously-associated input data associated with an application currently running on the tablet computer, an input field of the application, and an input entered in the input field of the application. The smartphone can transmit the previously-associated to the tablet computer. The previously-associated input data can include a browser history, frequently-visited websites, stored user credential data, auto-fill text data, or other previously-associated input data. As the previously-associated input data is stored on the smartphone (e.g., the more secure device), the likelihood of unauthorized access to the previously-associated input data can be reduced.

## Description

### FIELD OF TECHNOLOGY

The present disclosure relates generally to sharing data between electronic devices, and more specifically, to systems and methods of sharing previously-associated application data from a secure device to another device.

### BACKGROUND

Tablet computers are tablet-sized computers that can have many features of a larger full-size personal computer. Tablet computers can be communicatively coupled to an electronic device such as a handheld device like a smartphone. The electronic device can be configured to receive input signals which are used to control the actions of the tablet computer. The electronic device can have a text-entry mode, in which it can accept text input, and a cursor mode, in which it can accept input corresponding to the control of cursor. Similarly, the tablet computer can have a text-entry mode, in which it can accept text inputs.

The electronic device can act as a text-entry tool for entering text which is displayed on the tablet computer. A virtual keyboard of the electronic device can be used to select characters which can be displayed by the tablet computer. The tablet computer also can have a virtual keyboard thereon which can be used to select characters which can be displayed by the tablet computer. Characters selected at the tablet computer can transmit data corresponding thereto to the electronic device. For example, characters selected at the tablet computer cause the same characters to be simultaneously selected on the electronic device, and vice versa. Auto-completion information associated with the tablet computer may be available at the tablet computer as characters are selected at the tablet computer, and auto-completion information associated with the electronic device may be available at the electronic device as characters are selected at the electronic device, but the auto-completion information is typically available at and stored on the device at which characters are selected.

### BRIEF DESCRIPTION OF THE DRAWINGS

In order to describe the manner in which the features of the disclosure can be obtained, a more particular description of the principles briefly described above will be rendered by reference to specific embodiments thereof which are illustrated in the appended drawings. Understanding that these drawings depict only exemplary embodiments of the disclosure and are not therefore to be considered to be limiting of its scope, the principles herein are described and explained with additional specificity and detail through the use of the accompanying drawings in which:

Figure 1 is a flow chart of sharing previously-associated application data from a secure electronic device with another electronic device in accordance with an exemplary embodiment;

Figure 2 is a block diagram of a first device configured to receive previously-associated application data from a second device, such as a secure device, in accordance with an exemplary embodiment;

Figure 3 illustrates a first device and a second device that is a secure device communicatively coupled to one another, where the first device is running a web browsing application thereon;

Figure 4 illustrates a first device running a web browsing application thereon receiving previously-associated input data associated with the web browsing application from a second device that is a secure device, where the previously-associated input data is a previously-visited website;

Figure 5 illustrates a first device running a web browsing application thereon receiving previously-associated input data associated with the web browsing application from a second device that is a secure device, where the previously-associated input data are user credentials;

Figure 6 illustrates a first device running a web browsing application thereon receiving previously-associated input data associated with the web browsing application from a second device that is a secure device, where the previously-associated input data is auto-fill text data;

Figure 7 illustrates a computing device system in accordance with an exemplary embodiment; and

Figure 8 is a flow chart of sharing previously-associated application data from a secure electronic device with another electronic device in accordance with an exemplary embodiment, from the perspective of the secure device.

### DETAILED DESCRIPTION

Various embodiments of the disclosure are discussed in detail below. While specific implementations are discussed, it should be understood that this is done for illustration purposes only. A person skilled in the relevant art will recognize that other components and configurations may be used without parting from the scope of the disclosure.

Several definitions that apply throughout this document will now be presented. The phrase "coupled" is defined as connected, whether directly or indirectly through intervening components and is not necessarily limited to physical connections. Coupled devices are devices which are in signal communication with one another. For example, two devices that are coupled can be communicatively connected through an air interface.

The term "electronic device" is defined as any device that is capable of at least accepting data, transmitting data, and executing commands. For example, electronic devices can include, but are not limited to, portable communication devices, mobile communication devices, mobile computers, smartphones, computing pads, tablet computers, personal computers, desktop computers, laptop computers, netbooks, servers, routers, set-top phones, or other electronic devices capable of at least accepting data, transmitting data, and executing commands.

The present disclosure describes a system of sharing previously-associated application data from a secure device. In one non-limiting example, the system can include a first device, such as a tablet computer, and a second device, such as a smartphone, where the smartphone is the more secure device between the two devices. The smartphone can be communicatively coupled to or connected to a secured enterprise network. The secured enterprise network can use encryption and authentication protocols to secure the transmission of data across the enterprise network. As the smartphone is the more secure device, it is desirable to store sensitive data (for example, private data, confidential data, a browser history, auto-fill information, user credentials, passwords, and other data to which the user desires to limit access) at the smartphone. However, there can be instances where the user desires to access such sensitive data at the tablet computer while maintaining the security of the data. For example, a user can access a web browser application at the smartphone, and at a later time, can access a similar web browser application at the tablet computer. When the user accesses the web browser application at the tablet computer, the user may desire to access sensitive data previously-associated with the web browser application of the smartphone using the web browser application of the tablet computer. For example, the user can access a web-based email service via the web browser application of the smartphone, where the use must enter user credentials (for example, a username and password) to access the web-based email. The user can save these user credentials to the smartphone so that the user does not have to enter his user credentials each time the web-based email is accessed at the smartphone. At a later time, the user can couple the smartphone to a tablet computer and access the web-based email via a web browser application executed on the tablet computer, but the user will have to re-enter the user credentials at the tablet computer. As will be described in the following disclosure, the user credentials (or other sensitive data, as will be explained below) that were stored on the smartphone can be accessible and/or retrievable at a tablet computer communicatively coupled to the smartphone. However, it is desirable that when the user accesses the sensitive data at the tablet computer, the sensitive data remains secure. Accordingly, a need exists for sharing data, for example sensitive data associated with an application, from a secure device to another device, while maintaining the security of the sensitive data.

According to one non-limiting example embodiment of the present disclosure, the method for sharing previously-associated application data from a secure device (such as a smartphone) with another device (such as a tablet computer communicatively coupled to the smartphone) can include detecting, via at least one processor of one or both of the secure device and the device coupled to the secure device, an application running on the device coupled communicatively coupled to the secure device (e.g., the tablet computer). The application can be a web browser application including an input field (for example, a web-address bar). In response to detecting the application, a request for previously-associated input data associated with the input field can be transmitted from the tablet computer to the smartphone. The previously-associated input data can be previously-visited websites, bookmarked websites, favorite websites, frequently-visited websites, or other input data associated with the input field which is stored at the smartphone and/or associated with the application by the smartphone. In response to the request, the tablet computer can receive the previously-associated input data. For example, the smartphone can receive and process the tablet computer's request and determine which data the smartphone has stored or previously-associated with the input field of the application running at the tablet computer. After determining the previously-associated input data, the smartphone can transmit the previously-associated input data to the tablet computer. For example, the smartphone can: enable temporary access to the previously-associated input data by the tablet computer, transmit an encrypted version of the previously-associated input data to the tablet computer, transmit a temporary data structure (for example, a temporary file) including the previously-associated input data to the tablet computer, or transmit the previously-associated input data such that the tablet computer cannot store the previously-associated input data. That is, the previously-associated input data can remain stored at the smartphone, thereby ensuring the security of the data at the more secure device.

The method can further include receiving an input associated with the input field at the tablet computer. For example, the user can begin typing a website address in the web-address bar by typing in the first five characters (or any number of characters) of the website address, where the first five characters yield the received input. In response to the received input, the tablet computer can display at least one suggested previously-associated input data based at least in part on the received input and the previously-associated input data. For example, the at least one suggested previously-associated input data can include a previously-visited website, a bookmarked website, a favorite website, and a frequently-visited website having the characters of the received input. That is, the at least one suggested previously-associated input data can be a website address having the same first five characters as the characters inputted in the web-address bar displayed at the tablet computer. Again, while the tablet computer can display the previously-associated input data, the previously-associated input data remains stored at the smartphone, thereby ensuring the security of the previously-associated input data and limiting access to the previously-associated input data by unauthorized users and devices.

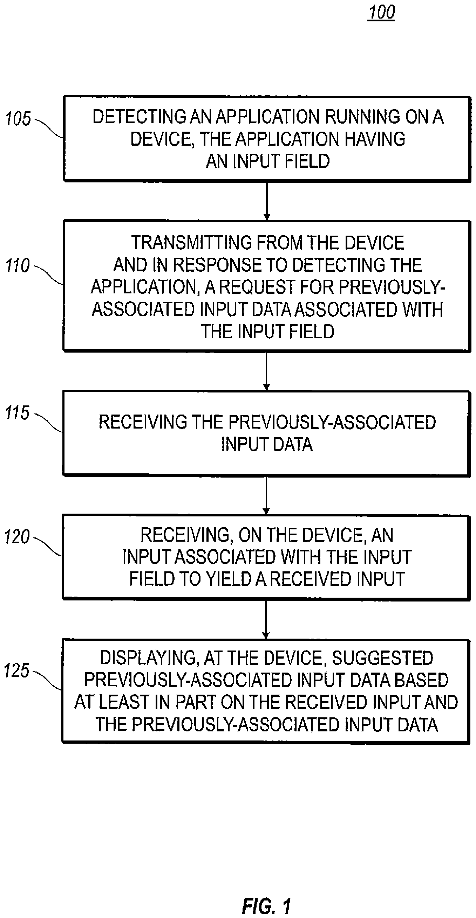

Further details regarding the method of sharing previously-associated application data from a secure device will be described below in relation to Figures 1-8.

Figure 1 is a flow chart of a method of sharing previously-associated application data from a secure device from the perspective of the first device 100. For example, the first device is a tablet computer, and the second device is a smartphone which is more secure than the tablet computer. The method 100 illustrated in Figure 1 is provided by way of example, as there are a variety of ways to carry out the method. Additionally, while the exemplary method 100 is illustrated with a particular order of steps, those of ordinary skill in the art will appreciate that Figure 1 and the steps illustrated therein can be executed in any order that accomplishes the technical advantages of the present disclosure and can include fewer or more steps than illustrated.

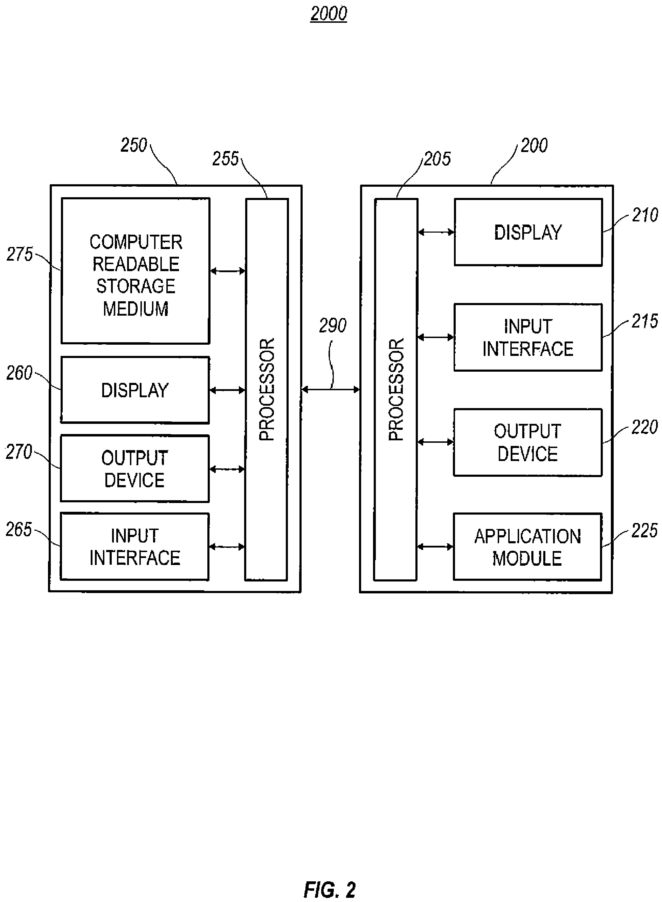

Each block shown in Figure 1 represents one or more processes, methods or subroutines, carried out in exemplary method 100. The steps illustrated in Figure 1 can be implemented in a system including a first device coupled to another electronic device. For example, in Figure 1, the first device 200 is a tablet computer and the second device 250 is a smartphone which is more secure than the electronic tablet. Each block shown in Figure 1 can be carried out by the processor of the first device 200 illustrated in Figure 2, processor of the second device 250, both processors of the first device 200 and the second device 250, or one or more processors communicatively coupled to one or both of the first device 200 and the second device 250. The flow chart illustrated in Figure 1 will be described in relation to and make reference to the first device 200 and a second device 250 illustrated in Figure 2. In the example discussed in the next paragraph, inputs on the first device 200 can be used to at least partially control the second device 250.

In Figure 1, the method 100 can begin at block 105. At block 105, an application on a first device 200 is detected, for example by the processor 205 of the first device 200, the processor 255 of the second device 250, both the processor 205 of the first device 200 and the processor 255 of the second device 250, or one or more processors or processing systems communicatively coupled to one or both of the first device 200 and the second device 250. The application can be stored on a computer-readable medium coupled to the first device 200 or stored in an application module 225 coupled to the first device 200. For purposes of illustration, the method 100 in Figure 1 will be described in relation to a web browser application having an input field by which a user can enter inputs associated with the application; however, other applications, such as a mobile application, a survey application, a web application, or any other application, where a user can enter inputs. The input field can include a data-entry field, a text-entry field, an auto-fill field, an auto-completion field, a web address bar, or other field in which information can be entered. After detecting the application, the method can proceed to block 110.

At block 110, a request for previously-associated input data associated with the input field of the application can be transmitted in response to detecting the application. Where the application is a web browser, the request can include a request for a previously-visited website, a favorite website, a bookmarked website, a frequently-visited website, previously-entered data associated with a previously-visited website, user credentials, passwords, user identification (userids), contact lists, contact information, addresses, auto-fill data (such as auto-fill text data), or other data associated with the application. In Figure 1, the request can be transmitted from the first device 200 (for example, the electronic tablet) to a second device 250 (for example, the smartphone). In such an example, the second device 250 can be more secure than the first device 200, and as such, the previously-associated input data can be stored on the second device, thereby protecting against unauthorized access to the previously-associated input data. In one embodiment, the previously-associated input data can be stored on a computer-readable storage medium coupled to the second device 250 or a computer-readable storage medium associated with the second device 250. In another embodiment, the previously-associated input data can be stored only at the second device 250, thereby further protecting against unauthorized access to the previously-associated input data. After transmitting a request for the previously-associated input data associated with the input field of the application running on the first device 200, the method 100 can proceed to block 115.

At block 115, previously-associated input data associated can be received in response to the request. For example, the previously-associated input data can be received by the first device 200 from the second device 250. For example, by a processor 205 of the first device 200. The processor 205 can process the previously-associated input data. The previously-associated input data can be received as: a communication link that allows temporary access to the previously-associated input data by the tablet computer, an encrypted version of the previously-associated input data to the tablet computer, a temporary data structure (for example, a temporary file) including the previously-associated input data, or any other data structure or transmission of the previously-associated input data that the first device 200 (e.g., the tablet computer) can receive and access without having the ability to store the previously-associated input data on the first device 200. That is, the previously-associated input data can remain stored at the smartphone, thereby ensuring the security of the data at the more secure device. In one embodiment, the processor 205 can execute instructions to store the previously-associated input data in a temporary memory device of the first device 200 such that the previously-associated input data can be stored until the previously-associated input data is needed. After receiving the previously-associated input data, the method 100 can proceed to block 120.

At block 120, input associated with the input field can be received. For example, an input can be received on the first device 200 and can be associated with the input field of the application currently running on the first device 200. The received input can be received and processed by the processor 205 of the first device 200. The received input can be, for example, a touch contact on a touch-sensitive display of the first device 200, an actuation of a key of the first device 200 (for example, a key of a keyboard, an auxiliary input key, a button of the first device, a key of a virtual keyboard or other key), or an actuation of an auxiliary input device of the first device (for example, a trackball, a trackpad, a cursor-key, a virtual cursor, or other auxiliary input device). For example, where the application is a web browser application and the input field is be a web address bar, the received input can be: a selection of the web address bar, inputs corresponding to the first five characters (or any number of characters) of a website address; a selection of a bookmark icon corresponding to a request to view bookmarked webpages; a button corresponding to a request to view previously-visited websites, frequently-visited websites, a browsing history; or other input associated with a web address bar or a web browser application. In response to the received input, the method 100 can proceed to block 125.

At block 125, suggested previously-associated input data can be displayed in response to the received input. The suggested previously-associated input data can be based at least in part on the received input and the previously-input data. The suggested previously-associated input data can be displayed in the input field of the application displayed on the first device 200, in a pull-down menu associated with the input field of the application, in a pop-up window, in a pop-up window displayed overlaid on the input field, or elsewhere on the display of the 210 first device 200 such that an association between the suggested previously-associated input data and the received input is provided. For example, the processor 205 of the first device 200 can determine which of the received previously-input data to display based on the received input associated with the input field ofthe application currently running on the first device 200. In one embodiment, where the application is a web browser, the input field is a web address bar, and the received input is the first five characters of a website address, the suggested previously-associated input data displayed can be a website address having the first five characters thereof matching the first five characters of the received input. For example, the suggested previously-associated input data displayed can be a website the processor 205 predicts as the website the user desires to visit based on the received input that is the first five characters of the website address. In another embodiment, where the suggested previously-associated input data can be a list of website addresses whose first five characters match the received input. In yet another embodiment, the suggested previously-associated input data displayed can be a list of previously-visited website addresses having at least some of the characters of the website addresses thereof matching characters of the received input. In still another embodiment, the suggested previously-associated input data displayed can be a list of frequently-visited website addresses.

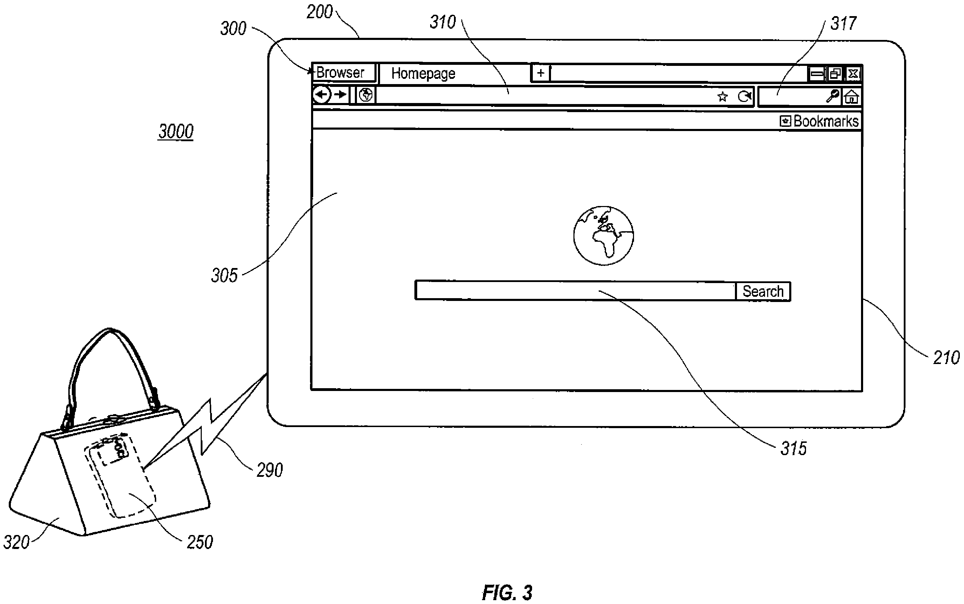

In another embodiment, the suggested previously-associated input data can be displayed substantially concurrently with receiving the input on the device associated with the input field. For example, the suggested previously-associated input data can be displayed as input is typed into the input field. In another embodiment, the suggested previously-associated input data can change as further input is entered into the input field, thereby dynamically displaying the most relevant previously-associated input data in response to the further inputs. For example, the first three (or any number) of characters of a website address can be typed into an input field that is a web-address field, and a first suggested previously-associated input data can be displayed concurrently as the input is entered into the web-address field. Then, as further input (for example, additional characters of the website address) are entered into the web-address field, the first suggested previously-associated input data can change to display a second suggested previously-associated input data that is more relevant or more closely matches the further input entered in the web-address field. Other examples of previously-associated input data and received inputs will be described in further detail below in relation to Figures 3-6.

While the method 100 of Figure 1 describes transmitting the request for previously-associated input data prior to receiving an input associated with the input field of the application, those of ordinary skill in the art will appreciate that the request for previously-associated input data can be transmitted substantially concurrently with receiving the input associated with the input field of the application.

Figure 2 illustrates a block diagram of an exemplary embodiment of a system 2000 for sharing previously-associated application data from a secure device including a first device 200 communicatively coupled to a second device 250, where the second device 250 is the secure device.

The first device 200 can be an electronic device such as a portable communication device, mobile communication device, mobile computer, smartphone, computing pad, tablet computer, personal computer, desktop computer, laptop computer, netbook, set-top phones, a portable digital assistant (PDA), a DVD player, a portable Blu-ray® player, a peer-to-peer cable television (for example, a network television), an audio-playback device, a portable music player, a peer-to-peer capable printer (for example, a network printer), or other electronic device capable of at least accepting data, transmitting data, and executing commands. In Figure 2, the first device 200 can be a tablet computer and can include at least one processor 205.

The first device 200 can include a processor 205 and a display 210. The processor 205 can be directly or indirectly coupled to the first device 200. The processor 205 can be a processor assembly including one or more processors. The processor 205 can be a solid state processor, a core processor, or any other processor configured to execute instructions for carrying out the method of sharing previously-associated application data from a secure device as will be described herein. The display 210 can be a touchscreen, a touch-sensitive display, a liquid crystal display (LCD), a light emitting diode display (LED), an active matrix organic light emitting diode display (AMOLED), or any other display on which graphical information can be displayed.

The first device 200 can include an input interface 215. The input interface 215 can be one or more of a keyboard, a keypad, a virtual keyboard, a plurality of keys, a single key, a mouse, a trackball, a trackpad, a touchpad, a touchscreen, a touch-sensitive display, a camera, a proximity sensor, a gesture sensor, an input device, an auxiliary input device, or any other input interface by which data can be input by a user. The input interface 215 can be integrated with the display 210. For example, the input interface 215 can be a touchscreen which is configured to display graphical information (such as a shared user interface) and also receive user inputs. The electronic device can include an output device 220. The output device 220 can be configured to output or transmit data from the first device 200 to another electronic device. For example, the output device 220 can be a transmitter, a transceiver, or any other device that can transmit or output data, for example to the second device 250 which is a secure device.

The first device 200 can include an application module 225. In at least one embodiment, the application module 225 can be stored on a non-transitory computer readable medium (not shown). For example, the application module 225 can be stored on a storage device and loaded into RAM or memory at runtime or may be stored as would be known in the art in other computer-readable memory locations. The application module 225 can be communicatively coupled to the processor 205. The application module 225 can control the processor 205 to perform various actions. For example, the application module 225 can control the processor 205 to perform the steps of the method of sharing previously-associated application data from a secure device as will be described herein, For example, the application module 225 can include instructions for controlling the processor 205 to execute a web browser application, a web application, a mobile application, a word processing application, a fillable-form application (for example, a web-based fillable form or document), a mobile banking application, an email application, or any other application which includes at least one input field by which a user can input data.

In Figure 2, the second device 250 can be an electronic device such as a portable communication device, mobile communication device, mobile computer, smartphone, computing pad, tablet computer, personal computer, desktop computer, laptop computer, netbook, set-top phones, a portable digital assistant (PDA), a DVD player, a portable Blu-ray® player, a peer-to-peer cable television (for example, a network television), an audio-playback device, a portable music player, a peer-to-peer capable printer (for example, a network printer), or other electronic device capable of at least accepting data, transmitting data, and executing commands. However, the second device 250 differs from the first device 200 in that the second device 250 is more secure than the first device. The second device 250 can be more secure by having security and privacy protocols implemented therein. For example, in Figure 2, the second device 250 can be a smartphone communicatively coupled to or connected to a secured enterprise network. The secured enterprise network can use encryption and authentication protocols to secure the transmission of data across the enterprise network. As the smartphone can be coupled to the secured enterprise network, sensitive data (for example, private data, confidential data, a browser history, auto-fill information, auto-completion information, user credentials, passwords, and other data to which the user desires to limit access) stored at the smartphone are protected from unauthorized access. However, such sensitive data can be accessed from the second device 250 by another device, for example, the first device 100, while maintaining the security of such data.

The second device 250 can have a processor 255, a display 260, an input interface 265, and an output device 270 similar to those of the first device 200. In Figure 2, the second device 250 can include a display 260 and an input interface 265 that are integrated. For example, the second device 250 can have a display 260 and an input interface 265 that are integrated as a touchscreen. The output device 270 of the second device 250 can be a transceiver. For example, the transceiver can be configured to receive data (for example, from the first c device 200) and output or transmit data (for example, to the first device 200). In other examples, the second device 250 can include an output device 270 that is configured for transmitting data and can include another device (not shown) separate from the output device 270 that is configured for receiving data. Also illustrated in Figure 2, the second device 250 can include a computer readable storage medium 275. For example, the computer readable storage medium 275 can be transitory or non-transitory. The computer readable storage medium 275 can be any available media that can be accessed by a general purpose or special purpose computer, including the functional design of any special purpose processor as discussed above. By way of example, and not limitation, such non-transitory computer-readable media can include RAM, ROM, EEPROM, CD-ROM or other optical disk storage, magnetic disk storage or other magnetic storage devices, or any other medium which can be used to carry or store desired program code means in the form of computer-executable instructions, data structures, or processor chip design. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

In Figure 2, the first device 200 and the second device 250 are communicatively coupled. For example, the first device 200 and the second device 250 can be communicatively coupled via a communication interface 290. The communication interface 290 can be a device pairing, such as a peer-to-peer (P2P) device pairing interface such as a Bluetooth® interface, a near-field-communication (NFC) interface, a near-field-communication-peer-to-peer (NFC P2P) interface, an air interface, a Wi-Fi- interface, or any other device pairing interface that enables the first device 200 and the second device 250 to be communicatively coupled. In Figure 2, the first device 200 and the second device 250 are communicatively coupled by a device pairing via an NFC interface. Data shared between the first device 200 and the second device 250 can be transmitted over the communication interface 290.

While Figure 2 illustrates two devices 200, 250, those of ordinary skill in the art will appreciate that more than two devices can be coupled to one another for sharing previously-associated application data from a secure device as will be described herein. Additionally, fewer or more components can be included in either one of the two computing device 200, 250 than as illustrated in Figure 2.

Figure 3 is an exemplary embodiment of a system 3000 of sharing previously-associated application data from a secure device. In Figure 3, the system 3000 can include a first device 200 that is a tablet computer communicatively coupled to a second device 250 that is a smartphone that is the secure device. For example, the smartphone 250 can be communicatively coupled to a secured enterprise network, thereby providing the secure device. As illustrated in Figure 3, the tablet computer 200 is running a web browser application 300 which can be displayed on the display 210 of the tablet computer 200. The web browser 300 can include a home page 305, which can be a default website that is displayed when the web browser 300 is first initiated. In Figure 3, the home page 305 can be a search engine website. Also illustrated in Figure 3, the web browser can include three input fields (or any number of input fields): a web address bar 310, a data-entry field 315 of a default home page 305, and search bar 317. The web address bar 310 can allow for text input, such as a website address, search terms for an internet search, or other information or data. The data entry field 315 of the default home page 305 can be a text-entry field that allows for text input, such as search terms for an internet search or other information associated with the default home page 305. The search bar 317 allows text input, such as search terms or other information which can be inputted to initiate a search by a default search engine associated with the search bar 317. For example, the search bar 317 can be a shortcut field of a default search engine in which a search can be quickly initiated without having to visit a webpage of the default search engine. In Figure 3, no inputs have been entered in any of the input fields 310, 315, 317.

In Figure 3, the smartphone 250 can be wirelessly communicatively coupled to the tablet computer 200. For example, the smartphone 250 can be paired to the tablet computer 200 via an NFC pairing 290. In other embodiments, the smartphone 250 can be paired to the tablet computer 200 via a Bluetooth® pairing, a Wi-Fi pairing, an air interface, a wired connection, or any other peer-to-peer device pairing. Also, as illustrated in Figure 3, the smartphone 250 can be remote from the tablet computer 200. For example, the smartphone 250 can be located in the pocket of a user, a backpack, a handbag 320, a desk drawer, or any other location remote from the tablet computer 200.

In Figure 3, when the tablet computer 200 is communicatively coupled to the smartphone 250, and the web browser application 300 is initiated, a request can be transmitted from the tablet computer 200 to the smartphone 250, for example via the NFC pairing 290, for previously-associated input data associated with the web browser application 300. The previously-associated input data can include one or more of browser history, previously inputted search terms, previously-visited websites, favorite websites, bookmarked websites, or other data that can be previously-associated with the web browser application 300. The smartphone 250 can process the request at the processor 255 of the smartphone 250 to determine what application 300 is currently running on the tablet computer 200. The processor 255 of the smartphone 250 can then execute instructions to search the computer-readable medium 275 thereof for previously-associated input data associated with the web browsing application 300 of the tablet computer 200.

If previously-associated input data is found, the smartphone 250 can transmit the previously-associated input data to the tablet computer 200, for example via the NFC pairing 290. The tablet computer 200 can receive previously-associated input data from the smartphone 250. In at least one embodiment, the tablet computer 200 can temporarily store the previously-associated input data in a memory device (not shown) of the tablet computer 200, for example, a cache memory, until the previously-associated input data is needed. In such an embodiment, the cache can be flushed upon exiting the web browser application 300, thereby ensuring the security of the previously-associated input data and thereby ensuring that the previously-associated input data is maintained at the smartphone 250 which can be the more secure electronic device between the smartphone 250 and the tablet computer 200.

In another embodiment, if previously-associated input data is found, the smartphone 250 can transmit the previously-associated input data to the tablet computer 200 in response to an input received at the tablet computer 200 and transmitted by the tablet computer 200 to the smartphone 250. That is, the smartphone 250 can wait until an input is entered in an input field 310, 315, 317 of the web browser application 300, and then determine which of the previously-associated input data to transmit to the tablet computer 200, thereby further ensuring the security of the previously-associated input data. In other words, the smartphone 250 can transmit previously-associated input data based on a determined application 300 running on the tablet computer 200 and an input entered in an input field 310, 315, 317 associated with the application 300. In such an embodiment, only the pertinent previously-associated input data determined based at least on the application 300 running on the tablet computer 200 and the input entered in the input field 310, 315, 317 thereby further preventing unauthorized access to previously-associated input data.

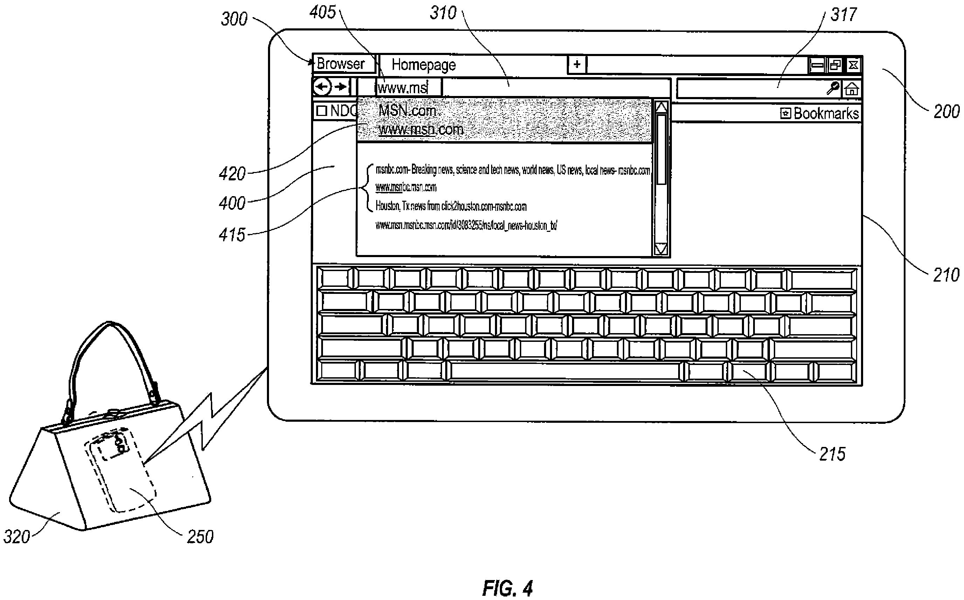

Figure 4 is an illustration of the system 3000 illustrated in Figure 3, where an input 405 has been entered in the web address bar 310 of the web browser application 300. In Figure 4, the tablet computer 200 has received previously-associated input data associated with the web browser in response to a request transmitted by the tablet computer 200 to the smartphone 250 upon initiation of the web browser application and a device pairing between the smartphone 250 and the tablet computer 200.

In Figure 4, the input 405 entered in the web address bar 310 can be text. Specifically, in Figure 4, the text can be the first five characters of a website address. However, those of ordinary skill in the art will appreciate that the input 405 can include fewer or more characters than as illustrated in Figure 4. The input 405 can be entered via an input interface 215, such as a virtual keyboard or touch-screen keyboard as illustrated in Figure 4. In other embodiments, the input 405 can be entered via voice commands, motion commands, or any other manner of entering inputs.

In Figure 4, the input 405 is an entry of the characters "www.ms". Based at least in part on the input 405, at least one suggested previously-associated input data can be displayed on the display 210 of the tablet computer 200. In Figure 4, the at least one suggested previously-associated input data 415 can be displayed in a list 400 adjacent the address bar 310. The list 400 can include a website addresses including a website address 420 having a portion of the website address matching the characters of the input 405, previously-visited websites whose website address have a portion thereof matching the characters of the input 405, frequently-visited websites, the last-visited website(s), a browsing history, or other websites or information associated with the browser application and input 405. In Figure 4, the suggested previously-associated input data 415 can be displayed such that one of the suggested previously-associated input data 415 can be designated, highlighted, or otherwise selected as a desired input associated with the web address bar 310.

As illustrated in Figure 4, the website address determined to be the closest match 420 to the input 405 can be displayed at the top of the list 415. For example, as the first item in the list 415. In the specific example illustrated in Figure 4, the closest match 420 is a website address "www.msn.com". The other suggested previously-associated input data 415 includes a website address having the characters "msnbc.com," a website address having the characters "click2houston.com-msnbc.com," and a website address having the characters "www.msn.msnbc.msn.com," for example. In another embodiment, the closest match 420 to the input 405 can be automatically filled-in to the address bar 310. In yet another embodiment, the closest match 420 can be automatically filled-in to the address bar 310 and the list 400 of the remaining suggested previously-associated input data 415 can also be displayed adjacent the address bar 310. In still another embodiment, additional inputs can be entered in the address bar 310 and the suggested previously-associated input data 415 can be updated or modified based on the additional inputs.

In Figure 4, the at least one suggested previously-associated input data 415 can be selected by the tablet computer 200 (for example, by the processor 205) from the received previously-associated input data in response to the input 405 entered in the address bar 310. For example, tablet computer 200 can temporarily store the previously-associated input data in a temporary memory device of the tablet computer 200, and the tablet computer 200 can then select which of the previously-associated input data to display as the at least one suggested previously-associated input data based at least in part on the input 405. In such an embodiment, as the previously-associated input data can be temporarily stored at the tablet computer 200 and as the previously-associated input data associated with the web browser application 300 can be provided at the tablet computer 200, the previously-associated input data remains securely stored at the smartphone 250, thereby protecting the previously-associated input data from unauthorized access and unauthorized dissemination.

In another embodiment, the at least one suggested previously-associated input data 415 can be determined and selected by the smartphone 250. For example, the processor 255 of the smartphone 250 can retrieve the previously-associated input data associated with the browser application 300. The tablet computer 200 can transmit a signal or data structure including the input 405 entered at the address bar 310 displayed at the tablet computer 200. In response to receiving the input 405, the smartphone 250 can determine, based on the received input 405, which of the previously-associated input data to transmit to the tablet computer 200 as suggested previously-associated input data 415 for display at the tablet computer 200. In such an embodiment, as the previously-associated input data transmitted from the smartphone 250 to the tablet computer 200 can be further limited to the pertinent previously-associated input data associated with the input 405. That is, even fewer previously-associated input data is disseminated from the smartphone 250 than if the previously-associated input data was first sent to the tablet computer 200. Thus, in such an embodiment, where the smartphone 250 determines which of the previously-associated input data should be displayed as the suggested previously-associated input data based on the input 405, the previously-associated input data can remain securely stored at the smartphone 250 and can be further protected from unauthorized access and unauthorized dissemination.

While Figure 4 illustrates that the input 405 can be entered at the address bar 310, those of ordinary skill in the art will appreciate the input 405 can be entered at the search bar 317 or the data entry field 315, and suggested previously-associated input data associated with the browser application 300 and the respective input field (search bar 317 or data entry field 315) can be displayed.

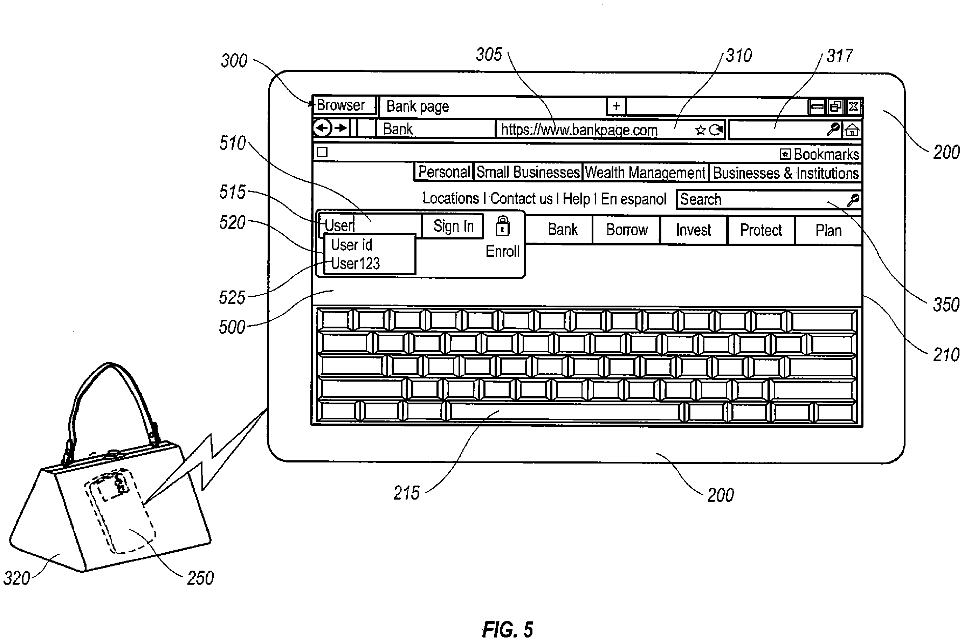

Figure 5 is an illustration of the system of Figure 3 but differs in that the web browser application 300 displays a banking website 305. For example, in Figure 5, the current website address 305 (https:llwww.bankpage.com) has been entered in the address bar 310 of the web browser application 300. Upon initiating web browser application and entering the website address of the banking website, the tablet computer 200 can transmit a request to the smartphone 250 for previously-associated input data associated with the browser application and the website address. In one embodiment, the request can be substantially concurrently transmitted with the entry of the website address 305 in the web address bar 310. In another embodiment, the request can be made after the website address 305 has been entered in the web address bar 310 and the website has been retrieved and displayed on the tablet computer 200. In response to the request, the smartphone 250 can transmit the previously-associated input data to the tablet computer 200. In one embodiment, the previously-associated input data can be temporarily stored on the tablet computer 200, for example in a memory device such as a cache memory. The previously-associated input data can be stored in the memory device until the browser application 300 is exited or terminated, until the browser application 300 leaves the website associated with the previously-associated input data, or until a new website is visited. For example, the cache memory can be flushed when the browser application 300 is exited or terminated, when the browser application 300 leaves the website associated with the previously-associated input data, or when a new website is visited. The display of the previously-associated input data will now be discussed.

In Figure 5, the banking website can have a home page 500 that can be displayed when the website is first visited. The banking website home page 500 can include input fields 510 and 350. Input field 510 can be a user credentials input field in which user credentials such as account numbers, a user identification (userid or username), passwords, phone numbers, address, or other user credential data can be entered. Input field 350 can be a search field for the website 305 by which search terms can be entered to search the banking website.

In Figure 5, input data 515 has been entered in the user credentials input field 510. The input data 515 can be text data and includes the first four characters of a username "User." However, those of ordinary skill in the art will appreciate that the input data 515 can include fewer or more characters than as illustrated in Figure 5. Based at least in part on the input 515, at least one suggested previously-associated input data can be displayed on the display 210 of the tablet computer 200. In Figure 5, the at least one suggested previously-associated input data 525 can be displayed in a list 520 adjacent the user credentials input field 510. The list 520 can include one or more suggested userids, usernames, passwords, account numbers, or other information associated with the user credential input field and associated with the entered input data 515. As illustrated in Figure 5, the list 520 can include suggested usreids having similar characters as the entered input data 515 which were previously-associated with the banking website 305 and the user credentials input field 510. Specifically, in Figure 5, the suggested previously-associated input data 525 can include the suggested userids: "User id" and "User123." The suggested previously-associated input data 525 can be presented in the list such that one of the suggested previously-associated input data 525 can be designated, highlighted, or otherwise selected as a desired input data associated with the user credential field 510. In Figure 5, the suggested previously-associated input data 525 can be displayed based on a probability algorithm. For example, the most probable userid can be displayed first in the list 520 based on a number of times that the suggested userid has been previously-entered or previously-associated with the banking website 305. While Figure 5 illustrates suggested previously-associated input data 525 associated with the user credentials input field 510, those of ordinary skill in the art that suggested previously-associated input data can be associated with the search field 350 of the website 305, the search bar 317 of the browser application or both.

Similar to Figure 4, in Figure 5 the at least one suggested previously-associated input data 525 can be selected, by the tablet computer 200 (for example, by the processor 205), from the received previously-associated input data in response to the input 515 entered in the user credentials input field 510. For example, tablet computer 200 can temporarily store the previously-associated input data in a temporary memory device of the tablet computer 200, and the tablet computer 200 can then select which of the previously-associated input data to display as the at least one suggested previously-associated input data based at least in part on the input 515. For example, the previously-associated input data can be received as: a communication link that allows temporary access to the previously-associated input data by the tablet computer, an encrypted version of the previously-associated input data to the tablet computer, a temporary data structure (for example, a temporary file) including the previously-associated input data, or any other data structure or transmission of the previously-associated input data that the first device 200 (e.g., the tablet computer) can receive and access without having the ability to store the previously-associated input data on the first device 200. In such an embodiment, as the previously-associated input data is only temporarily stored at the tablet computer 200 and as only the previously-associated input data associated with the web browser application 300 and the banking website 305 is provided at the tablet computer 200, the previously-associated input data remains securely stored at the smartphone 250, thereby protecting the previously-associated input data from unauthorized access and unauthorized dissemination.

In another embodiment, the at least one suggested previously-associated input data 525 can be determined and selected by the smartphone 250. For example, the processor 255 of the smartphone 250 can retrieve the previously-associated input data associated with the browser application 300 and the banking website 305. The tablet computer 200 can transmit a signal or data structure including the website address 305 and the input 515 entered in the user credentials input field 510. In response to receiving the input 515, the smartphone 250 can determine, based on the received input 515, which of the previously-associated input data to transmit to the tablet computer 200 as suggested previously-associated input data 525 for display at the tablet computer 200. In such an embodiment, as the previously-associated input data transmitted from the smartphone 250 to the tablet computer 200 can be further limited to the pertinent previously-associated input data associated with the input 515. That is, even fewer previously-associated input data can be disseminated from the smartphone 250 than if the previously-associated input data was first sent to the tablet computer 200. Thus, in such an embodiment, where the smartphone 250 can determine which of the previously-associated input data should be displayed as the suggested previously-associated input data based on the input 515, the previously-associated input data can remain securely stored at the smartphone 250 and can be further protected from unauthorized access and unauthorized dissemination.

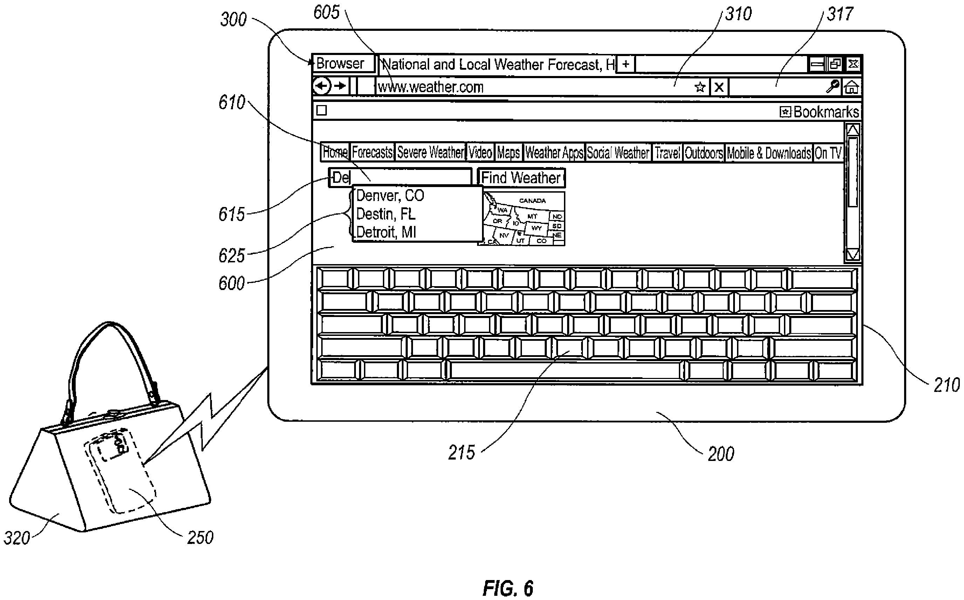

Figure 6 is an illustration of the system of Figures 3 and 4 but differs in that the web browser application 300 displays a weather website 605. For example, in Figure 6, the current website address 605 (www.weather.com) has been entered in the address bar 310 of the web browser application 300. Upon initiating web browser application and entering the website address of the banking website, the tablet computer 200 can transmit a request to the smartphone 250 for previously-associated input data associated with the browser application and the website address 305. In one embodiment, the request can be substantially concurrently transmitted with the entry of the website address 305 in the web address bar 310. In another embodiment, the request can be made after the website address 305 has been entered in the web address bar 310 and the website has been retrieved and displayed on the tablet computer 200. In response to the request, the smartphone 250 can transmit the previously-associated input data to the tablet computer 200. In one embodiment, the previously-associated input data can be temporarily stored on the tablet computer 200, for example in a memory device such as a cache memory. The previously-associated input data can be stored in the memory device until the browser application 300 is exited or terminated, until the browser application 300 leaves the website associated with the previously-associated input data, or until a new website is visited. For example, the cache memory can be flushed, cleared, or otherwise deleted, when the browser application 300 is exited or terminated, when the browser application 300 leaves the website associated with the previously-associated input data, or when a new website is visited. The display of the previously-associated input data will now be discussed.

In Figure 6, the weather website can have a home page 600 that can be displayed when the website is first visited. The weather website home page 600 can include an input field 615. Input field 615 can be a data entry field, a text entry field, a search field, or any other field by which input associated with the weather website can be entered. In Figure 6, the input field 615 can be a data entry field in which a city, place, or other location can be entered to retrieve the current weather at the entered location.

In Figure 6, input data 615 has been entered in the data entry field 615. The input data 615 can be text data and can include the first two characters of a city, place, or location: "De." However, those of ordinary skill in the art will appreciate that the input data 615 can include fewer or more characters than as illustrated in Figure 6. Based at least in part on the input 615, at least one suggested previously-associated input data can be displayed on the display 210 of the tablet computer 200. In Figure 6, the at least one suggested previously-associated input data 625 can be displayed in a list adjacent the data entry field 615. The list can include one or more suggested cities, states, countries, locations, or other previously-associated input data associated with the data entry field 615 and the weather website 605. As illustrated in Figure 6, the list can include suggested cities having similar characters as the entered input data 615 which were previously-associated with the weather website 605 and the input data 615 entered in the data entry field 610. Specifically, in Figure 6, the suggested previously-associated input data 625 can include the suggested cities: "Denver, CO" "Destin, FL," and "Detroit, MI." The suggested previously-associated input data 625 can be presented in the list such that one of the suggested previously-associated input data 625 can be designated, highlighted, or otherwise selected as a desired input data associated with the data entry field 610. In Figure 6, the suggested previously-associated input data 625 can be displayed based on a probability algorithm. For example, the most probable location can be displayed first in the list based on a number of times that the suggested location has been previously-entered or previously-associated with the weather website 605.

Similar to Figures 3-5, in Figure 6 the at least one suggested previously-associated input data 625 can be selected by the tablet computer 200 (for example, by the processor 205) from the received previously-associated input data in response to the input 615 entered in the user credentials input field 610. For example, tablet computer 200 can temporarily store the previously-associated input data in a temporary memory device of the tablet computer 200, and the tablet computer 200 can then select which of the previously-associated input data to display as the at least one suggested previously-associated input data based at least in part on the input 615. In such an embodiment, as the previously-associated input data is only temporarily stored at the tablet computer 200 and as only the previously-associated input data associated with the web browser application 300 and the banking website 305 is provided at the tablet computer 200, the previously-associated input data remains securely stored at the smartphone 250, thereby protecting the previously-associated input data from unauthorized access and unauthorized dissemination.

In another embodiment, the at least one suggested previously-associated input data 625 can be determined and selected by the smartphone 250. For example, the processor 255 of the smartphone 250 can retrieve the previously-associated input data associated with the browser application 300 and the weather website 605. The tablet computer 200 can transmit a signal or data structure including the website address 605 and the input 615 entered in the data entry field 610. In response to receiving the input 615, the smartphone 250 can determine, based on the received input 615, which of the previously-associated input data to transmit to the tablet computer 200 as suggested previously-associated input data 525 for display at the tablet computer 200. In such an embodiment, as the previously-associated input data transmitted from the smartphone 250 to the tablet computer 200 can be further limited to the pertinent previously-associated input data associated with the input 615. That is, even fewer previously-associated input data can be disseminated from the smartphone 250 than if the previously-associated input data was first sent to the tablet computer 200. Thus, in such an embodiment, where the smartphone 250 can determine which ofthe previously-associated input data should be displayed as the suggested previously-associated input data based on the input 615, the previously-associated input data can remain securely stored at the smartphone 250 and can be further protected from unauthorized access and unauthorized dissemination.

While Figures 3-6 illustrate providing previously-associated input data associated with input fields of an application that is a web browser application 300, those of ordinary skill in the art will appreciate that the application can be a web application, a smartphone application, a banking application, a social media application, an e-commerce application, a search engine application, a media playback application, or any other application which includes an input field by which a user may enter data.

Also, in Figures 3-6, if a previously-associated input data cannot be determined based on the input received in any of the input fields illustrated therein, the received input can be stored in the computer readable storage medium 275 of the smartphone 200 to update the computer readable storage medium 275 and the previously-associated input data. Updating the computer-readable storage medium 275 and the previously-associated input data can ensure that the suggested previously-associated input data displayed at the tablet computer 200 includes the most recent and relevant previously-associated input data associated with the application funning on the tablet computer 200.

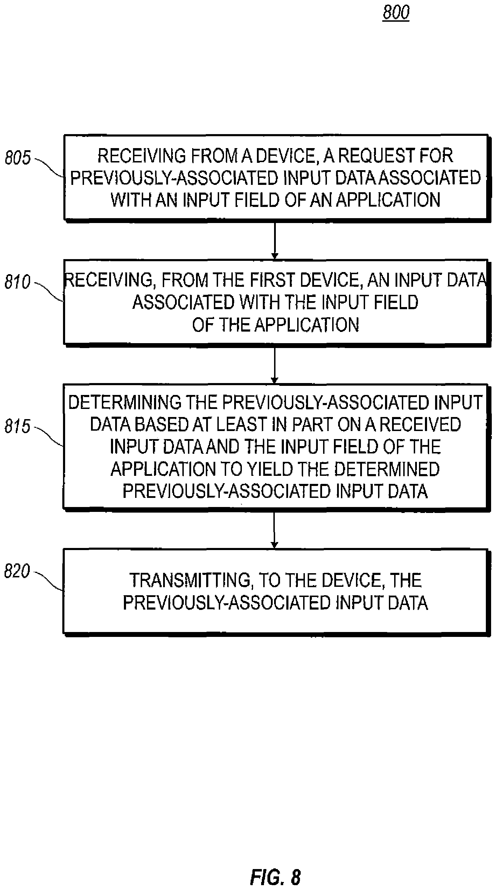

The disclosure now turns to Figure 8 which is a flowchart of the method 800 of sharing previously-associated application data from a secure device, where the method 800 is described from the perspective of the secure device. In Figure 8, the secure device can be a smartphone 250 which can be configured to share previously-associated application data with a first device, such as a tablet computer 200.

The method 800 illustrated in Figure 8 is provided by way of example, as there are a variety of ways to carry out the method. Additionally, while the exemplary method 800 is illustrated with a particular order of steps, those of ordinary skill in the art will appreciate that Figure 8 and the steps illustrated therein can be executed in any order that accomplishes the technical advantages of the present disclosure and can include fewer or more steps than illustrated.

Each block shown in Figure 8 represents one or more processes, methods or subroutines, carried out in exemplary method 800. Each block shown in Figure 8 can be carried out by the processor of an electronic device 250 illustrated in Figure 2. The flow chart illustrated in Figure 8 will be described in relation to and make reference to the first device 200 (for example, the tablet computer 200) and a second device 250 (for example, the smartphone 250) illustrated in Figure 2.

In Figure 8, the method 800 can begin at block 805. At block 805, a request for previously-associated input data associated with an input field of an application can be received, for example by the processor 255 of the secure device 250. In Figure 8, the request can be transmitted to the secure device 250 from the tablet computer 200. The request can include data indicating what application is currently running on the tablet computer 200 and data indicative of an input field associated with the application, After a request for previously-associated input data is received, the method 800 can proceed to block 810.

At block 810, input data associated with an input field of the application running on the tablet computer 200 can be transmitted to and received by the secure device 250. For example, as illustrated in Figures 3-6, the input data received by the secure device 250 can be transmitted by the tablet computer 200 via the communication interface 290 (e.g., an NFC pairing). The input data can include the characters entered in the input field. For example, the first few characters of a website address (Figure 4), the first few characters of user credential data (Figure 5), the first few characters of a data entry field (Figure 6), or any other input data entered in an input field of an application. In one embodiment, the input data can be received substantially concurrently with the request for previously-associated input data. In other embodiments, the input data can be received at a time later or after the request for previously-associated input data is received. In either embodiment, after input data is received by the secure device 250, the method 800 can proceed to block 815.

At block 815, previously-associated input data can be determined based at least in part on the received input data and the input field of the application. For example, the processor 255 of the secure device 250 can process the input data associated with the input field of the application, data indicative of the input field(s) of the application, and data indicative of the application currently running on the tablet computer to determine what previously-associated input data has been associated with the input field of the application. In one embodiment, the previously-associated input data can be stored in a computer readable medium 275 of the secure device 250, and the processor 255 of the secure device 250 can determine which of the previously-associated input data is associated with the input data received from the tablet computer 200 and can select that portion of the previously-associated input data for transmission to the tablet computer. After the previously-associated input data is determined, the method 800 can proceed to block 820.

At block 820, the determined previously-associated data can be transmitted from the secure device 250 to the tablet computer 200. For example, the determined previously-associated can be transmitted as: a connection or communication link in that allows for temporary access to the previously-associated input data, an encrypted version of the previously-associated input data, a temporary data structure (for example, a temporary file) including the previously-associated input data, or any other data, communication link, connection, or transmission in which the previously-associated input data cannot be stored at the device which receives the previously-associated input data. That is, the previously-associated input data can remain stored at the smartphone, thereby ensuring the security of the data at the more secure device.

While not illustrated in Figure 8, the method 800 can include a step of determining at least one suggested previously-associated input data associated with the input data received from the tablet computer. For example, the at least one suggested previously-associated input data can include a most relevant previously-associated input data, a most recent previously-associated data, a closest-matching previously-associated input data, or suggested previously-associated input data associated with the input data received from the tablet computer 200. The processor 255 of the secure device 250 can determine the at least one suggested previously-associated input data. For example, the secure device 250 can determine that a portion of the determined previously-associated data is more relevant or pertinent to the received input data than other previously-associated input data stored on the secure device 250. The secure device 250 can select the at least one suggested previously-associated input data and transmit the at least one suggested previously-associated input data to the tablet computer 200 for display thereon.

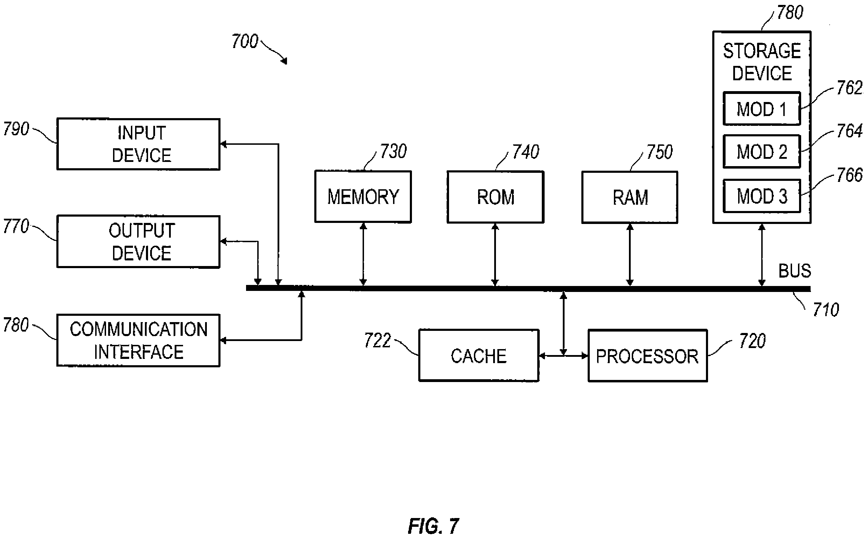

The disclosure now turns to a brief description of a basic general purpose system or computing device, as shown in Figure 7, which can be employed to practice the concepts is disclosed herein. The components disclosed herein can be incorporated in whole or in part into handsets, transmitters, servers, and/or any other electronic or other computing device.

With reference to Figure 7, an exemplary system 700 includes a general-purpose computing device 700 or electronic device, including a processing unit (CPU or processor) 720 and a system bus 710 that couples various system components including the system memory 730 such as read only memory (ROM) 740 and random access memory (RAM) 750 to the processor 720. The system 700 can include a cache 722 of high speed memory connected directly with, in close proximity to, or integrated as part of the processor 720. The system 700 copies data from the memory 730 and/or the storage device 760 to the cache 722 for quick access by the processor 720. In this way, the cache provides a performance boost that avoids processor 720 delays while waiting for data. These and other modules can control or be configured to control the processor 720 to perform various actions. Other system memory 730 may be available for use as well. The memory 730 can include multiple different types of memory with different performance characteristics. It can be appreciated that the disclosure may operate on a computing device 700 with more than one processor 720 or on a group or cluster of computing devices networked together to provide greater processing capability. The processor 720 can include any general purpose processor and a hardware module or software module, such as module 4 762, module 2 764, and module 3 766 stored in storage device 760, configured to control the processor 720 as well as a special-purpose processor where software instructions are incorporated into the actual processor design. The processor 720 may essentially be a completely self-contained computing system, containing multiple cores or processors, a bus, memory controller, cache, etc. A multicore processor may be symmetric or asymmetric.

The system bus 710 may be any of several types of bus structures including a memory bus or memory controller, a peripheral bus, and a local bus using any of a variety of bus architectures. A basic input/output system (BIOS) stored in ROM 740 or the like, may provide the basic routine that helps to transfer information between elements within the computing device 700, such as during start-up. The computing device 700 further includes storage devices 760 such as a hard disk drive, a magnetic disk drive, an optical disk drive, tape drive or the like. The storage device 760 can include software modules 762, 764, 766 for controlling the processor 720. Other hardware or software modules are contemplated. The storage device 760 is connected to the system bus 710 by a drive interface. The drives and the associated computer readable storage media provide nonvolatile storage of computer readable instructions, data structures, program modules and other data for the computing device 700. In one aspect, a hardware module that performs a particular function includes the software component stored in a non-transitory computer-readable medium in connection with the necessary hardware components, such as the processor 720, bus 710, display 770, and so forth, to carry out the function. The basic components are known to those of skill in the art and appropriate variations are contemplated depending on the type of device, such as whether the device 700 is a small, handheld computing device, a desktop computer, or a computer server.

Although the example described herein employs the hard disk 760, it should be appreciated by those skilled in the art that other types of computer readable media which can store data that are accessible by a computer, such as magnetic cassettes, flash memory cards, digital versatile disks, cartridges, random access memories (RAMs) 750, read only memory (ROM) 740, a cable or wireless signal containing a bit stream and the like, may also be used in the exemplary operating environment. Non-transitory computer-readable storage media expressly exclude media such as energy, carrier signals, electromagnetic waves, and signals per se.

To enable user interaction with the computing device 700, an input device 790 represents any number of input mechanisms, such as a microphone for speech, a touch-sensitive screen for gesture or graphical input, keyboard, mouse, motion input, speech and so forth. An output device 770 can also be one or more of a number of output mechanisms known to those of skill in the art. In some instances, multimodal systems enable a user to provide multiple types of input to communicate with the computing device 700. The communications interface 780 generally governs and manages the user input and system output. There is no restriction on operating on any particular hardware arrangement and therefore the basic features here may easily be substituted for improved hardware or firmware arrangements as they are developed.

For clarity of explanation, the illustrative system example is presented as including individual functional blocks including functional blocks labeled as a "processor" or processor 720. The functions these blocks represent may be provided through the use of either shared or dedicated hardware, including, but not limited to, hardware capable of executing software and hardware, such as a processor 720, that is purpose-built to operate as an equivalent to software executing on a general purpose processor. For example the functions of one or more processors presented in Figure 7 may be provided by a single shared processor or multiple processors. (Use of the term "processor" should not be construed to refer exclusively to hardware capable of executing software.) Illustrative examples may include microprocessor and/or digital signal processor (DSP) hardware, read-only memory (ROM) 740 for storing software performing the operations discussed below, and random access memory (RAM) 750 for storing results. Very large scale integration (VLSI) hardware examples, as well as custom VLSI circuitry in combination with a general purpose DSP circuit, may also be provided.

The logical operations of the various examples are implemented as: (1) a sequence of computer implemented steps, operations, or procedures running on a programmable circuit within a general use computer, (2) a sequence of computer implemented steps, operations, or procedures running on a specific-use programmable circuit; and/or (3) interconnected machine modules or program engines within the programmable circuits. The system 700 shown in Figure 7 can practice all or part of the recited methods, can be a part of the recited systems, and/or can operate according to instructions in the recited non-transitory computer-readable storage media. Such logical operations can be implemented as modules configured to control the processor 720 to perform particular functions according to the programming of the module. For example, Figure 7 illustrates three modules Mod 1 762, Mod 2 764 and Mod 3 766 which are modules configured to control the processor 720. These modules may be stored on the storage device 760 and loaded into RAM 750 or memory 730 at runtime or may be stored as would be known in the art in other computer-readable memory locations.

Examples within the scope of the present disclosure may also include tangible and/or non-transitory computer-readable storage media for carrying or having computer-executable instructions or data structures stored thereon. Such non-transitory computer-readable storage media can be any available media that can be accessed by a general purpose or special purpose computer, including the functional design of any special purpose processor as discussed above. By way of example, and not limitation, such non-transitory computer-readable media can include RAM, ROM, EEPROM, CD-ROM or other optical disk storage, magnetic disk storage or other magnetic storage devices, or any other medium which can be used to carry or store desired program code means in the form of computer-executable instructions, data structures, or processor chip design. When information is transferred or provided over a network or another communications connection (either hardwired, wireless, or combination thereof) to a computer, the computer properly views the connection as a computer-readable medium. Thus, any such connection is properly termed a computer-readable medium. Combinations of the above should also be included within the scope of the computer-readable media.

Computer-executable instructions include, for example, instructions and data which cause a general purpose computer, special purpose computer, or special purpose processing device to perform a certain function or group of functions. Computer-executable instructions also include program modules that are executed by computers in stand-alone or network environments. Generally, program modules include routines, programs, components, data structures, objects, and the functions inherent in the design of special-purpose processors, etc. that perform particular tasks or implement particular abstract data types. Computer-executable instructions, associated data structures, and program modules represent examples of the program code means for executing steps of the methods disclosed herein. The particular sequence of such executable instructions or associated data structures represents examples of corresponding acts for implementing the functions described in such steps.

Those of skill in the art will appreciate that other examples of the disclosure may be practiced in network computing environments with many types of computer system configurations, including personal computers, hand-held devices, multi-processor systems, microprocessor-based or programmable consumer electronics, network PCs, minicomputers, mainframe computers, and the like. Examples may also be practiced in distributed computing environments where tasks are performed by local and remote processing devices that are linked (either by hardwired links, wireless links, or by a combination thereof) through a communications network. In a distributed computing environment, program modules may be located in both local and remote memory storage devices.

The various embodiments described above are provided by way of illustration only and should not be construed to limit the scope of the disclosure. For example, the principles herein apply not only to a smartphone device but to other devices capable of receiving communications such as a laptop computer. Those skilled in the art will readily recognize various modifications and changes that may be made to the principles described herein without following the example embodiments and applications illustrated and described herein, and without departing from the scope of the disclosure.

## Claims

1. A method comprising:
detecting (105), via at least one processor (205), an application (300) running on a device (200), the application (225) comprising an input field (310);
transmitting (110), from the device (205) and in response to detecting the application (300), a request for previously-associated input data associated with the input field (310);
receiving (115) the previously-associated input data (415);
receiving (120) on the device (205) an input (405) associated with the input field (310) to yield a received input (405); and
displaying (125) at the device at least one suggested previously-associated input data (420) based at least in part on the received input (405) and the previously-associated input data (415).

2. The method of claim 1, wherein the at least one suggested previously-associated input data (420) is selected from the received previously-associated input data (415) based at least in part on the received input (405) associated with the input field (310).

3. The method as recited in any one of the previous claims, wherein the previously-associated input data (415) is not stored on the device (205).

4. The method as recited in any one of the preceding claims, wherein device is a first device (205), and wherein the previously-associated input data (415) is stored on a second device (255) communicatively coupled to the first device (205).

5. The method as recited in claim 4, wherein the second device (250) is connected to a secured enterprise network.

6. The method as recited in any one of claims 4-5, wherein the first device (205) and the second device (250) are communicatively coupled via one of: a Bluetooth® interface, a near-field-communication interface (290), a near-field-communication-peer-to-peer interface, and a Wi-Fi- interface.

7. The method as recited in any one of the preceding claims, wherein:
the detected application is a web browser (300) and the input field includes a web-address bar (310); and
the previously-associated input data (415) includes at least one of a previously-visited website, a favorite website, a bookmarked website, and a frequently-visited website.

8. The method as recited in any one of the preceding claims, wherein:
the input field (510) includes a text-entry field; and
the previously-associated input data (520) includes at least one of user credential data, user identification data, a password, and an auto-fill text entry.

9. The method as recited in any one of the preceding claims, wherein transmitting (110) the request for previously associated data (420) occurs substantially concurrently with receiving the input (405) on the device (205) associated with the input field (310).

10. The method as recited in any one of the preceding claims, wherein receiving (115) the previously-associated input data (415) is temporary.

11. The method as recited in any one of the preceding claims, wherein displaying (125) at the device at least one suggested previously-associated input data (420) occurs substantially concurrently with receiving the input (405) on the device (205) associated with the input field (310).

12. A method comprising:
receiving (805), from a device (205), a request for previously-associated input data associated with an input field (310) of an application (300);
receiving (810), from the device (205), an input data (405) associated with the input field (310);
determining (815) the previously-associated input data based (415) at least in part on the received input data (405) and the input field (310); and
transmitting (820), to the device (205), the previously-associated input data (415).

13. The method of claim 12, wherein the previously-associated input data (415) includes at least one suggested previously-associated input data (415) associated with the input data (405).

14. The method as recited in any one of claims 12-13, wherein transmitting (820) the previously-associated input data (415) comprises permitting temporary access to the previously-associated input data (405).

15. A system comprising:
a processor (205);
a non-transitory computer readable storage medium storing instructions for controlling the processor to perform steps ofthe method as recited in any one of claims 1-14.
